# EUROPEAN PATENT SPECIFICATION

(11) **EP 2 408 196 B1**
(45) Date of publication and mention of the grant of the patent: **11.01.2017**
(21) Application number: 10290393.7
(22) Date of filing: 14.07.2010
(51) Int. Cl.: H04N 5/445

(54) **A method, server and terminal for generating a composite view from multiple content items**
Verfahren, Server und Endgerät zur Erzeugung einer Verbundansicht von mehrfachen Inhaltselementen
Procédé, serveur et terminal pour la génération d'une vue composite à partir de plusieurs éléments de contenu

(43) Date of publication of application: 18.01.2012
(73) Proprietor: ALCATEL LUCENT, 92100 Boulogne-Billancourt (FR)
(72) Inventor: Rondao Alface, Patrice, 1400 Nivelles (BE); Macq, Jean-François, 1083 Ganshoren (BE)
(74) Representative: ALU Antw Patent Attorneys

(56) References cited:
- US-A1- 2007 110 044
- US-A1- 2009 158 337
- US-A1- 2010 011 012

## Description

### Field of the Invention

The present invention generally relates to generating a composite view that will be displayed on a terminal device, e.g. a mobile device, a desktop or laptop, a TV screen, a home cinema set, etc. The composite view will typically contain plural regions that will represent content from several heterogeneous content sources like for instance multiple video cameras at an event, e.g. a soccer game or a concert. Each of these regions may be presented with different frame rate, spatial resolution and/or bit depth. The current invention in particular concerns the generation of such composite views enabling personalized visualization at a desired quality by the user while optimizing delivery of the content for the addressed terminal and actual network conditions.

### Background of the Invention

Today, media delivery is either based on a push mechanism, like for instance legacy TV broadcast or IPTV (Internet Protocol TeleVision) multicast, or based on a pull mechanism, like for instance HTTP (HyperText Transfer Protocol) streaming or RTSP (Real Time Streaming Protocol).

One of these pull-based protocols, HTTP adaptive streaming (HAS), known for instance from the *Adobe Datasheet "HTTP Dynamic Streaming"* enables a client to view a video in the highest quality possible, and to request lower quality when the available bandwidth in the network is insufficient, or at start-up of a new video in order to enable quick start through downloading initial segments of lower quality. HTTP adaptive streaming thereto relies on the availability of video files in different qualities and segmented in time slots. The cited Datasheet from Adobe can be retrieved from the Internet via the following URL:
http://192.150.8.60/uk/products/httpdynamicstreaming/pdfs/httpdynamicstream ing_datasheet.pdf

Although the HAS client automatically adapts the requested video quality to the network conditions, HTTP adaptive streaming between existing video servers and client terminals does not enable personalization, i.e. navigation, region of interest (ROI) selection, object of interest tracking, and/or viewing angle selection. HTTP adaptive streaming also does not optimize the delivery for a specific terminal - it is the user's responsibility to select the appropriate version of a video file for download - and does not deliver multi-camera content in an interactive manner for composite view generation in the terminal.

In *the article "A Novel Interactive Streaming Protocol for Image-Based 3D Virtual Environment Navigation" from the authors Azzedine Boukerche, Raed Jarrar and Richard W. Pazzi,* transmission of 3D computer graphics with 3D scene descriptions for heterogeneous terminals is described. The techniques disclosed in this article allow Level-of-Detail (LoD) control. Views are reconstructed by making use of rendering techniques and point or polygon-based objects.

Although the techniques known from A. Boukerche et al. introduce LoD control and view dependent rendering, they are destined to computer graphics and scale poorly to other content such as animations or video feeds. Their applicability is therefore rather limited.

Another, somehow related prior art solution, is known from *the article "The Rombic Dodecahedron Map: An Efficient Scheme for Encoding Panoramic Video" from Chi-Wing Fu, Liang Wan, Tien-Tsin Wong and Chi-Sing Leung.* Therein, omni-directional video rendering is made possible by mapping video textures on a spherical or cylindrical polygonal mesh when a camera cluster centre can be modelled as the polygonal model centre or axis. Views are stitched and mapped on the polygonal model.

Just like the techniques known from A. Boukerche et al., the omni-directional video rendering from Chi-Wing Fu et al. poorly scales to multi-camera video composition where in general camera cluster positions are arbitrary and inputs are heterogeneous.

In the still image world, other solutions exist where plural images are from different sources and at different resolutions, are mosaiced and stitched together in order to generate a desired view. An example thereof is described in *the article "A Protocol for Interactive Streaming of Image-Based Scenes over Wireless Ad-hoc Networks" from the authors Azzedine Boukerche, Tingxue Huang and Richard Werner Nelem Pazzi.* These solutions are not applicable to video or animations. Once a view is selected and generated, no further content has to be delivered. These solutions in general also do not involve fusion based on warping or interpolation, and do not support overlapping, blending or morphing of heterogeneous content.

Yet another background *article, "Pre-Fetching Based on Video Analysis for Interactive Region-of-Interest Streaming of Soccer Sequences" from the authors Aditya Mavlankar and Bernd Girod,* describes video stream manipulations for user-defined or interactive random access in regions-of-interest. This article tackles the management of different single-camera recorded media objects rather than complex, personalized video compositions.

In summary, existing pull- or push based video delivery protocols do not support transmission of multi-camera content optimized for the terminal and actual network conditions, and enabling personalized visualization. Solutions that enable personalized views are devoted to still images, virtual scenes or video textures mapped on spheres or cylinders, and do not scale to other content such as video and animations.

It is an objective of the present invention to disclose a method for generating a composite view from multiple content items, and a corresponding server and terminal that overcome the shortcomings of the above defined prior art solutions. Server in the context of the current patent application denotes either the originating content server or an intermediate proxy server. More particularly, it is an objective to disclose a method, server and terminal that enable composing personalized views at a desired quality from several heterogeneous inputs. Personalization in this context means navigation, region-of-interest selection and/or viewing angle selection. It is a further objective to deliver the inputs in an optimal way for the terminal, fully exploiting the available bandwidth in the network. Thus, real-time tuning of the streamed content quality based on both network and terminal capabilities is envisaged for multi-source content that will be used in a composite view.

### Summary of the Invention

According to the present invention, the above objectives are realized through the method for generating a composite view from multiple content items through interaction between a terminal and a server, as defined by claim 1, the method comprising the steps of:
- transferring from the terminal to the server a terminal description containing a capability profile of the terminal;
- transferring from the server to the terminal information indicative for available content items and interaction modes; and
- transferring from the terminal to the server information indicative for selected content items and selected interaction modes,
and the iterative process of:
- streaming from the server to the terminal selected content items optimized according to the terminal description and the selected interaction modes;
- fusing one or more of the content items in the terminal;
- rendering the composite view from fused content items;
- transferring feedback from the terminal to the server; and
- adapting the streamed content items based on the feedback.

Thus, the method according to the invention is based on negotiation between server and terminal that enables the terminal to specify its capabilities and then select one or more content items to be displayed within the produced composite view from a list of available content items, e.g. a program menu. The available content items and available interaction modes, e.g. navigation, viewing angle selection or region of interest (ROI) selection, may take into account the available bandwidth in the network and the terminal description. The information indicative for available content items and available interaction modes may be adapted and streamed continuously to the terminal. Upon selection by the terminal, the server shall decide which scalable streams to send at which quality, together with information enabling to fuse the content items at terminal side for rendering the composite view. Streaming the scalable content items, and fusing them for rendering may be iteratively fine grained upon feedback from the terminal. The feedback may for instance be indicative for processing power usage in the terminal, memory usage in the terminal, observed user interactivity rate, detection that navigation approaches the view border as a result of which surrounding portions may have to be transferred, etc. In summary, the method according to the invention combines personalization of a composite view generated from multi-source content in a terminal with optimized delivery of the content for that terminal under control of the servers in the network through an iterative negotiation loop between server and terminal.

Optionally, as is specified by claim 2, the capability profile of the terminal in the method according to the present invention represents a metadata file comprising one or more of:
- memory capacity of the terminal;
- display size of the terminal;
- processing power of the terminal;
- available video decoders in the terminal;
- supported fusing functionality in the terminal;
- supported interactivity commands in the terminal.

Obviously, the above list is non-exhaustive. The capability profile of the terminal may comprise any specification or status parameter of the terminal that could be useful for the server in selecting the quality of the content items that will be transferred, e.g. the layers, bit depth, resolution, etc. Supported fusing functionalities may include overlay, warping, interpolation, stitching, morphing, contrast alignment etc. whereas supported interactivity commands may include commands for region of interest selection, view angle selection, navigation commands, etc.

Also optionally, as defined by claim 3, the information indicative for available content items may comprise a television program menu.

Indeed, information indicative for available views or content items may be updated and streamed continuously, whenever it is updated (asynchronously), upon request of the terminal (pull), or regularly upon initiative of the server (push). The information may for instance be in the format of a TV program menu or electronic program guide.

Further optionally, as defined by claim 4, the interaction modes in the method according to the current invention may comprise:
- navigating;
- selecting a region of interest;
- selecting a view angle.

Again, any skilled person will appreciate that the above list is not exhaustive but reflects the most common ways of interacting with video in order to personalize the composite view, available in for instance production director software. Navigating may for instance be extendible within a given larger view by selecting scalable quality layers of the surrounding parts of the view to be rendered. Selection of a region of interest (ROI) may be complemented with zooming, and selecting the viewing angle may be possible for instance in case of an event where multiple cameras record the same object or event from different angles.

According to another optional aspect of the method according to the current invention, defined by claim 5, the fusing may comprise one or more of:
- warping one or more of the content items;
- interpolating one or more of the content items;
- stitching one or more of the content items;
- overlaying some of the content items.

Again, it is notified that this list is non-exhaustive and a skilled person will appreciate that other fusing functions may be available to the fusing processor in the terminal, like for instance contrast alignment. The fusion processor capabilities may further be described in terms of processing power, like for instance the guaranteed real-time fusing for K mk x nk images at f frames per second.

As is further indicated by claim 6, adapting the streamed content items may comprise adapting to network conditions, terminal conditions and usage of the content items in the terminal.

Indeed, based on the available bandwidth, the terminal capabilities and the desired interaction modes, the server selects the correct content and quality and multiplexes the necessary streams to be fused in the terminal together with metadata information for rendering. As an example, the scalable layers of the streamed items may be increased or decreased together with metadata adaptation in response to a change in available bandwidth or feedback from the terminal.

Further optionally, as defined by claim 7, the method for generating a composite view according to the current invention may comprise pre-fetching surrounding parts of one or more of the content items.

Indeed, as already indicated here above, navigation and zooming within a larger view than the one displayed may be allowed, provided that scalable quality layers of the surrounding parts of the view are selected and pre-fetched in order to be rendered. For this reason, the fusion process and rendering process are preferably decoupled. The fusion process can then generate a larger view than what is needed for the terminal screen. This way, latency can be reduced when navigating outside the view and requests to the server can be minimized.

In addition to a method for generating a composite view as defined by claim 1, the current invention also relates to a corresponding server for generating a composite view from multiple content items through interaction with a terminal, as defined by claim 8, the server comprising:
- means for receiving and analyzing a terminal description containing a capability profile of the terminal;
- means for transmitting to the terminal information indicative for available content items and interaction modes;
- means for receiving from the terminal information indicative for selected content items and selected interaction modes;
- means for streaming to the terminal selected content items optimized according to the terminal description and the selected interaction modes;
- means for receiving feedback from the terminal; and
- means for adapting the streamed content items based on the feedback.

The current invention further also relates to a corresponding terminal for generating a composite view from multiple content items through interaction with a server, as defined by claim 9, the terminal comprising:
- means for sending to the server a terminal description containing a capability profile of the terminal;
- means for receiving from the server information indicative for available content items and interaction modes;
- means for sending to the server information indicative for selected content items and selected interaction modes;
- at least one video decoder for receiving from the server and decoding selected content items optimized according to the terminal description and the selected interaction modes;
- a fusing processor for fusing one or more of the content items;
- a rendering processor for rendering the composite view from fused content items; and
- means for transferring feedback to the server;
- the at least one video decoder being adapted for receiving from the server and decoding streamed content items adapted based on the feedback.

### Brief Description of the Drawings

Fig. 1 illustrates an embodiment of the terminal 100 according to the present invention;
Fig. 2 illustrates an embodiment of the server 200 according to the present invention; and
Fig. 3 illustrates a composite view 300 generated according to an embodiment of the method according to the present invention.

### Detailed Description of Embodiment(s)

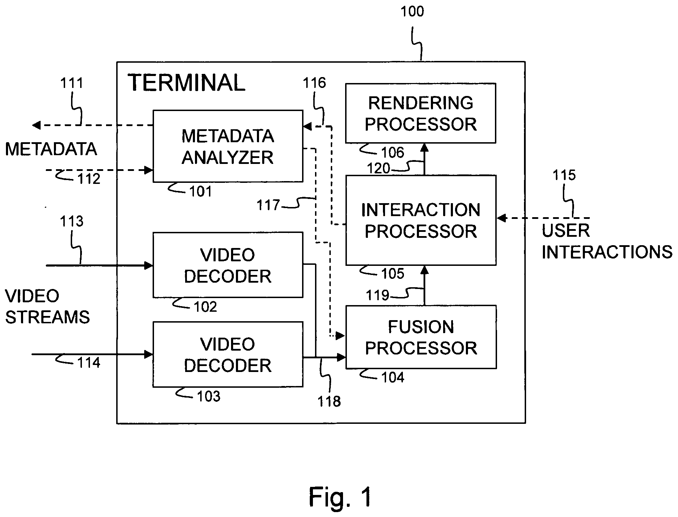

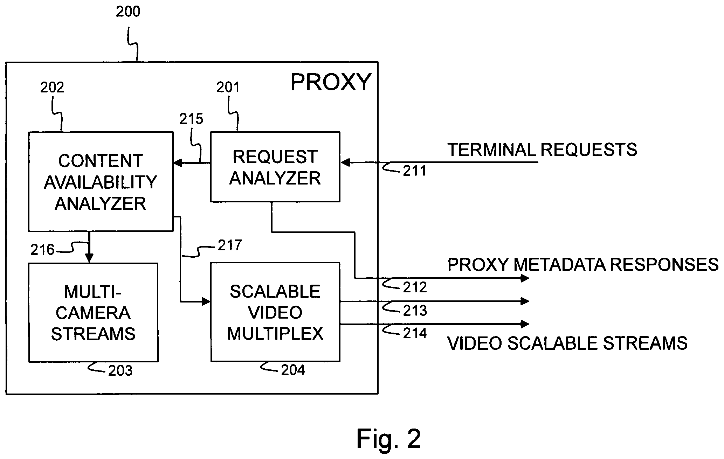

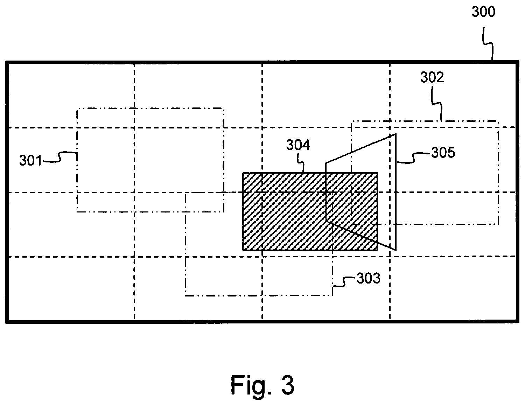

In the following paragraphs, an embodiment of the method according to the invention will be described for generating a composite view, i.e. multi-video composition 300 in Fig. 3. The method is based on a negotiation protocol between a terminal, 100 in Fig. 1, and a server, 200 in Fig. 2. The negotiation protocol aims at creating the best possible rendering of the composite view 300 at the terminal 100. The method offers the user of terminal 100 plain interactivity and immersive experiences for generating personalized composite views based on heterogeneous source content.

In the method, the client terminal 100 is responsible for requesting, i.e. pulling the video items it needs, but the server 200 (or proxy server) also has the responsibility to choose how it will fulfill these requests, in other words what it will push towards the client terminal 100. The negotiation enables the terminal 100 to first request a certain video item for an area, e.g. 301, inside the produced multi-video composition 300 and secondly enables the server 200 to decide which scalable video streams at which quality level to send to the terminal 100 together with the necessary information in order to fuse the video items for rendering described in metadata files.

Furthermore, for interactivity purposes, the negotiation also includes a pre-fetching mechanism in order to allow for navigation and random access zooming in a given larger view than the one displayed. Thereto, scalable layers of the surrounding parts of the view are selected and streamed to be fused and rendered. The rendering and the fusion processing are decoupled. This enables the fusion function to create a larger view than strictly needed for the terminal screen. As a result, latency can be reduced and requests to the network can be minimized when the user is navigating outside the view displayed on the screen.

In the following paragraphs, an interactive terminal 100 connected to a media-aware proxy server 200 providing the multi-video content for composed view 300 will be described in detail. The terminal 100, designed to support the current invention, is capable of flexible traffic adaptation. The proxy server 200 is able to stream multi-camera content as needed for the composed view 300 in a scalable and interactive manner.

Apart from traditional components like for instance a display and user interface, terminal 100 includes a metadata analyzer 101, several video decoder units, 102 and 103, a fusion processor 104, an interaction processor 105 and a rendering processor 106.

The metadata analyzer 101 receives metadata files from the server 200, as is indicated by arrow 112 in Fig. 1, and interaction commands from the interaction processor 105, as is indicated by arrow 116 in Fig. 1. The metadata analyzer 101 interprets and analyzes the received metadata and interaction commands, and outputs information 117 to the fusion processor 104 specifying how to reconstruct the video content from the received and decoded streams 118. The metadata analyzer 101 further sends requests to the server 200, as is indicated by arrow 111 in Fig. 1.

The video decoders, 102 and 103, decode the video streams 113 and 114 received from the server 200.

The fusion processor 104 receives as input the decoded video streams 118 as RGB images and the metadata files 117 interpreted by the metadata analyzer 101. These metadata files 117 contain the reconstruction parameters needed to fuse the images. The fusion processor's capabilities are described in terms of functionalities like overlaying, warping, interpolating, stitching, and in terms of processing power, like the guaranteed real-time fusion for K mk x nk images at f frames per second, K, mk, nk and f being integer values. The fusion processor 104 sends the reconstructed and fused views 119 to the interaction processor 105 which deals with user interactions 115 for navigation and region of interest (ROI) selection in the fused images.

The interaction processor 105 detects whether the region of interest selection and navigation are available in the output 119 of the fusion processor 104. If this is the case, the selected view 120 is sent to the rendering processor 106. Otherwise, the interaction processor 105 sends a request 116 to the metadata analyzer 101 such that the metadata analyzer 101 can send a request 111 to the server 200 for adapted delivery of the concerned video stream.

The rendering processor 106 renders the desired video content on the terminal screen.

The terminal 100 represented in Fig. 1 initiates a communication with the server 200 shown in Fig. 2 by sending a first message identifying the desired video or content item(s) to be visualized. The terminal 100 also sends to the server 200 its capabilities expressed in terms of number of video decoders, memory capacity, screen size and processing power. The media-aware proxy server 200 illustrated by Fig. 2, thereupon acknowledges receipt of the request 211 from the terminal 100. The request analyzer 201 in the server 200 analyzes the request 211 received from the terminal 100, and forwards to the content availability analyzer 202 information 215 that is indicative for the desired content. In response to request 211, the request analyzer 201 sends proxy metadata responses 212 to the terminal 100 that contain information related to the available content, e.g. available views in the format of a TV program menu, and related to available modes of interactions that correspond to the terminal's capabilities.

The terminal 100 then can request a particular view and a particular interaction scenario. It is noticed here that changing views or interaction scenarios is understood as a request to another content item but synchronized with the one previously being watched, unlike zapping in traditional IPTV. Interaction scenarios correspond to navigation, region of interest (ROI) selection, viewing angle selection, or a combination thereof. Upon receipt of this request, the content availability analyzer 202 in the server 200 selects the correct video content from multiple camera streams 203, as is indicated by arrow 216, and forwards these streams to the scalable video multiplexer 204, as is indicated by arrow 217. The server 200 then sends the corresponding scalable video streams 213 and 214 needed to reconstruct the desired views in the terminal 100. Based on the terminal capabilities, the server 200 chooses the number of streams and selects the most relevant scalable layers of each stream.

A modified metadata file is sent together with the video streams 213 and 214 to the terminal 100 to enable the latter to decode the incoming streams 113 and 114, and to enable fusing thereof. The metadata file also contains information enabling interaction on the terminal 100 such as for instance zooming.

Summarizing, based on the selected interaction scenario, e.g. production director guided, the proxy server 200 selects the correct content to be sent and multiplexes the necessary streams to be fused on the terminal 100 together with metadata information to enable fusing and adequate rendering.

In case no navigation is foreseen, the proxy server 200 optimizes the quality of the sent content with respect to available bandwidth and the terminal capabilities. In case navigation is supported, some extra-view pre-fetching is necessary to ensure that navigating outside the requested view is possible, e.g. at a lower quality and with a minimal bandwidth and terminal processing penalty.

Summarizing the entire system, the terminal 100 is equipped with an interface able to negotiate with a dedicated interface in proxy server 200 for the visualization of a multi-video source scalable fused composite view 300. The terminal 100 composes a view 300 that is based on different geometrical operations between different decoded streams 118. These decoded streams 118 are described in terms of resolution, frame rate and bit depth by the metadata scripts coming from the proxy server 200.

Some intelligent terminal-based analysis is possible, for instance by selecting lower scalable layers of the incoming streams 113 and 114 if navigation or processing power variations would impose that. The fusion of images is then reduced to the fusion of available quality representations of those images. The terminal 100 and proxy server 200 achieve delivery and rendering in best effort thereby reducing latency to acceptable levels meeting fluidity and immersion requirements.

In Fig. 3, an example of a multi-source composite view 300 generated by terminal 100 is shown. Whereas 300 represents the composed multi-camera view, 301, 302, and 303 represent high dynamic range sub-views, 304 represent a user requested sub-view that should be displayed at time t on the terminal screen, and 305 represents a pan tilt zoom sub-view. The different sub-views come from heterogeneous cameras whose geometrical extent is represented on the global panoramic view 300. The source video items can be of different types so they contribute efficiently to the global view 300. The image sources that can contribute to the composed view 300 are the ones of which the geometrical extent intersects the required sub-view. The global view 300 is then created by fusion, i.e. morphing, warping, stitching, contrast alignment, etc. of these sources.

Concluding, the negotiation protocol between terminal 100 and proxy server 200 is as follows. In a first announcement step, terminal 100 sends a request to the proxy server 200. In a second acknowledgement step, the proxy server 200 sends available content information to the terminal 100. In a third step, terminal 100 sends its capability profile information to the proxy server 200 as a metadata file specifying supporting fusing functionalities like overlay, warping, interpolation, stitching, and further specifying processing power, memory information, and supported interactivity commands. In a fourth step, the proxy server 200 sends information on available views and supported interaction modes for the available bandwidth and terminal description. This information may be continuously adapted and streamed to the terminal 100. It can be represented in the format of a television program menu. In a fifth step, the terminal 100 selects the desired view and interaction mode based on user input. Thereafter, an iterative negotiation loop is started between the terminal 100 and the proxy server 200. In the iterative negotiation loop:
- The proxy server 200 sends the best stream and metadata configuration based on a global optimization of available bandwidth and terminal description, view extent and interactive mode.
- The terminal 100 sends its processing power usage information and observed user interactivity rate. The terminal 100 also detects whether interactive navigation approaches the view border.
- Based on the feedback, the proxy server 200 adapts the streamed video items and metadata. The proxy server 200 for instance increases or decreases scalable layers of the streams and adapts the metadata. The proxy server 200 updates the proposal sent to the terminal 100.
The loop is iteratively executed until the terminal 100 sends a request for another view or ends the viewing. When the viewing is ended, the terminal 100 sends to the proxy server 200 a message indicating that it wants to quit the transmission. The proxy server 200 thereupon acknowledges the end of viewing request and stops the transmission.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method for generating a composite view (300) from multiple content items through interaction between a terminal (100) and a server (200), said method comprising the steps of:
- transferring from said terminal (100) to said server (200) a terminal description (111; 211) containing a capability profile of said terminal (100);
- transferring from said server (200) to said terminal (100) information (112; 212) indicative for available content items and interaction modes; and
- transferring from said terminal (100) to said server (200) information indicative for selected content items and selected interaction modes, **CHARACTERIZED IN THAT** said method further comprises an iterative process of:
- streaming from said server (200) to said terminal (100) selected content items (113, 114; 213, 214) optimized according to said terminal description and said selected interaction modes;
- fusing one or more of said content items in said terminal (100);
- rendering said composite view from fused content items;
- transferring feedback from said terminal (100) to said server (200); and
- adapting said streamed content items based on said feedback.

2. A method for generating a composite view according to claim 1,
wherein said capability profile of said terminal (100) represents a metadata file (111; 211) comprising one or more of:
- memory capacity of said terminal (100);
- display size of said terminal (100);
- processing power of said terminal (100);
- available video decoders in said terminal (100);
- supported fusing functionality in said terminal (100);
- supported interactivity commands in said terminal (100).

3. A method for generating a composite view according to claim 1,
wherein said information (212) indicative for available content items comprises a television program menu.

4. A method for generating a composite view according to claim 1,
wherein said interaction modes comprise:
- navigating;
- selecting a region of interest;
- selecting a view angle.

5. A method for generating a composite view according to claim 1,
wherein said fusing comprises one or more of:
- warping one or more of said content items;
- interpolating one or more of said content items;
- stitching one or more of said content items;
- overlaying some of said content items.

6. A method for generating a composite view according to claim 1,
wherein adapting said streamed content items comprises adapting to network conditions, terminal conditions and usage of said content items in said terminal (100).

7. A method for generating a composite view according to claim 1, further comprising:
- pre-fetching surrounding parts of one or more of said content items.

8. A server (200) for generating a composite view (300) from multiple content items through interaction with a terminal (100), said server (200) comprising:
- means (201) for receiving and analyzing a terminal description (111; 211) containing a capability profile of said terminal (100);
- means (201, 202) for transmitting to said terminal (100) information (112; 212) indicative for available content items and interaction modes;
- means (201, 202) for receiving from said terminal (100) information indicative for selected content items and selected interaction modes,
**CHARACTERIZED IN THAT** said server (200) further comprises:
- means (202, 203, 204) for streaming to said terminal (100) selected content items (113, 114; 213, 214) optimized according to said terminal description and said selected interaction modes;
- means (201) for receiving feedback from said terminal (100); and
- means (202, 203, 204) for adapting said streamed content items (113, 114; 213, 214) based on said feedback.

9. A terminal (100) for generating a composite view (300) from multiple content items through interaction with a server (200), said terminal (100) comprising:
- means (101) for sending to said server (200) a terminal description (111) containing a capability profile of said terminal (100);
- means (101) for receiving from said server (200) information (112) indicative for available content items and interaction modes; and
- means (101) for sending to said server (200) information indicative for selected content items and selected interaction modes,
**CHARACTERIZED IN THAT** said terminal (100) further comprises:
- at least one video decoder (102, 103) for receiving from said server (200) and decoding selected content items (113, 114; 213, 214) optimized according to said terminal description and said selected interaction modes;
- a fusing processor (104) for fusing one or more of said content items;
- a rendering processor (106) for rendering said composite view (300) from fused content items;
- means (101) for transferring feedback to said server (200);
and **in that**:
- said at least one video decoder (102, 103) is adapted for receiving from said server (200) and decoding streamed content items (113, 114; 213, 214) adapted based on said feedback.

## Patentansprüche

1. Verfahren zum Generieren einer zusammengesetzten Ansicht (300) mehrerer Inhaltsposten anhand der Interaktion zwischen einem Endgerät (100) und einem Server (200), wobei besagtes Verfahren die folgenden Schritte umfasst:
- Übermitteln einer Endgerätbeschreibung (111; 211) mit einem Fähigkeitsprofil besagten Endgeräts (100) von besagtem Endgerät (100) an besagten Server (200);
- Übermitteln verfügbare Inhaltsposten und Interaktionsmodi indizierender Informationen (112; 212) von besagtem Server (200) an besagtes Endgerät (100); und
- Übermitteln ausgewählte Inhaltsposten und Interaktionsmodi indizierender Informationen von besagtem Server (100) an besagtes Endgerät (200); und
**DADURCH GEKENNZEICHNET, DASS** das besagte Verfahren weiterhin den folgenden schrittweisen Prozess umfasst:
- das Streamen ausgewählter Inhaltsposten (113, 114; 213, 214), die gemäß besagter Endgerätbeschreibung und besagten, ausgewählten Interaktionsmodi optimiert wurden, von besagtem Server (200) zu besagtem Endgerät (100);
- das Verschmelzen eines oder mehrerer besagter Inhaltsposten in besagtem Endgerät (100);
- die Wiedergabe besagter Ansicht verschmolzener Inhaltsposten;
- die Übermittlung einer Rückmeldung von besagtem Endgerät (100) an besagten Server (200); und
- das Anpassen besagter gestreamter Inhaltsposten auf der Grundlage besagter Rückmeldung.

2. Verfahren zum Generieren einer zusammengesetzten Ansicht nach Anspruch 1, wobei besagtes Fähigkeitsprofil besagten Endgeräts (100) in einer Metadatendatei (111; 211) mit einem oder mehreren der folgenden Einträge besteht:
- Speicherkapazität besagten Endgeräts (100);
- Displaygröße besagten Endgeräts (100);
- Prozessorleistung besagten Endgeräts (100);
- verfügbare Videodecoder auf besagtem Endgerät (100);
- unterstützte Verschmelzungsfunktion besagten Endgeräts (100);
- unterstützte Interaktivitätsbefehle besagten Endgeräts (100).

3. Verfahren zum Generieren einer zusammengesetzten Ansicht nach Anspruch 1, wobei die besagten, verfügbare Inhaltsposten indizierenden Informationen (212) ein Fernsehprogrammmenü umfassen.

4. Verfahren zum Generieren einer zusammengesetzten Ansicht nach Anspruch 1, wobei besagte Interaktionsmodi umfassen:
- Navigieren;
- Auswahl einer gewünschten Region;
- Auswahl eines Bildformats.

5. Verfahren zum Generieren einer zusammengesetzten Ansicht nach Anspruch 1, wobei besagtes Verschmelzen eine oder mehrere der folgenden Funktionen umfasst:
- das Verzerren eines oder mehrerer besagter Inhaltsposten;
- das Interpolieren eines oder mehrerer besagter Inhaltsposten;
- das Stitchen eines oder mehrerer besagter Inhaltsposten;
- das Überlagern einiger der besagten Inhaltsposten.

6. Verfahren für das Generieren einer zusammengesetzten Ansicht nach Anspruch 1, wobei das Anpassen besagter gestreamter Inhalte das Anpassen an Netzwerkbedingungen, Endgerätbedingungen und Benutzung besagter Inhaltsposten in besagtem Endgerät (100) umfasst.

7. Verfahren zum Generieren einer zusammengesetzten Ansicht nach Anspruch 1, weiterhin umfassend:
- das Prefetchen umliegender Teile eines oder mehrerer besagter Inhaltsposten.

8. Server (200) zum Generieren einer zusammengesetzten Ansicht (300) mehrerer Inhaltsposten anhand der Interaktion mit einem Endgerät (100), wobei besagter Server (200) umfasst:
- Mittel (201) für das Empfangen und Analysieren einer Endgerätbeschreibung (111; 211) mit einem Fähigkeitsprofil besagten Endgeräts (100);
- Mittel (201; 202) für das Übermitteln verfügbare Inhaltsposten und Interaktionsmodi indizierender Informationen (112; 212) an besagtes Endgerät (100);
- Mittel (201; 202) für den Empfang verfügbare Inhaltsposten und Interaktionsmodi indizierender Informationen von besagtem Endgerät (100);
**DADURCH GEKENNZEICHNET, DASS** besagter Server (200) weiterhin umfasst:
- Mittel (202, 203, 204) für das Streamen ausgewählter Inhaltsposten (113, 114; 213, 214), die gemäß besagter Endgerätbeschreibung und besagten, ausgewählten Interaktionsmodi optimiert wurden, zu besagtem Endgerät (100);
- Mittel (201) für den Empfang von Rückmeldungen von besagtem Endgerät (100); und
- Mittel (202, 203, 204) für das Anpassen besagter gestreamter Inhaltsposten (113, 114; 213, 214) auf der Grundlage besagter Rückmeldungen.

9. Endgerät (100) zum Generieren einer zusammengesetzten Ansicht (300) mehrerer Inhaltsposten anhand der Interaktion mit einem Server (200), wobei besagtes Endgerät (100) umfasst:
- Mittel (101) für das Senden einer Endgerätbeschreibung (111) mit einem Fähigkeitsprofil besagten Endgeräts (100) an besagten Server (200);
- Mittel (101) für den Empfang verfügbare Inhaltsposten und Interaktionsmodi indizierender Informationen (112) von besagtem Server (200);
- Mittel (101) für das Senden verfügbare Inhaltsposten und Interaktionsmodi indizierender Informationen an besagten Server (200);
**DADURCH GEKENNZEICHNET, DASS** besagtes Endgerät (100) weiterhin umfasst:
- mindestens einen Videodecoder (102, 103) für den Empfang von besagtem Server (200) und für das Decodieren ausgewählter Inhaltsposten (113, 114; 213, 214), die gemäß besagter Endgerätbeschreibung und besagten, ausgewählten Interaktionsmodi optimiert wurden;
- ein Verschmelzungsprozessor (104) für das Verschmelzen eines oder mehrerer der besagten Inhaltsposten;
- einen Renderingprozessor (106) für das Rendering der besagten, zusammengesetzten Ansicht (300) verschmolzener Inhaltsposten;
- Mittel (101) für das Senden von Rückmeldungen an besagten Server (200);
sowie **dadurch gekennzeichnet, dass**:
- der besagte, mindestens eine Videodecoder (102, 103) dafür ausgelegt ist um von besagtem Server (200) gestreamte Inhaltsposten (113, 114; 213, 214), die gemäß besagter Rückmeldung angepasst wurden, zu empfangen und zu decodieren.

## Revendications

1. Procédé pour générer une vue composite (300) à partir de multiples éléments de contenu par le biais d'une interaction entre un terminal (100) et un serveur (200), ledit procédé comprenant les étapes suivantes :
- transférer à partir dudit terminal (100) vers ledit serveur (200) une description de terminal (111 ; 211) contenant un profil de capacité dudit terminal (100) ;
- transférer à partir dudit serveur (200) vers ledit terminal (100) des informations (112 ; 212) indiquant des éléments de contenu disponibles et des modes d'interaction ; et
- transférer à partir dudit terminal (100) vers ledit serveur (200) des informations indiquant des éléments de contenu sélectionnés et des modes d'interaction sélectionnés,
**CARACTÉRISÉ EN CE QUE** ledit procédé comprend en outre le processus itératif suivant :
- diffuser en continu, à partir dudit serveur (200) vers ledit terminal (100), des éléments de contenu sélectionnés (113, 114 ; 213, 214) optimisés conformément à ladite description du terminal et auxdits modes d'interaction sélectionnés ;
- fusionner un ou plusieurs desdits éléments de contenu dans le terminal (100) ;
- rendre ladite vue composite à partir des éléments de contenu fusionnés ;
- transférer des informations en retour à partir dudit terminal (100) vers ledit serveur (200) ; et
- adapter lesdits éléments de contenu diffusés en continu en fonction desdites informations en retour.

2. Procédé pour générer une vue composite selon la revendication 1,
dans lequel ledit profil de capacité dudit terminal (100) représente un fichier de métadonnées (111 ; 211) comprenant un ou plusieurs des éléments suivants :
- une capacité de mémoire dudit terminal (100) ;
- une taille d'affichage dudit terminal (100) ;
- une puissance de traitement dudit terminal (100) ;
- des décodeurs vidéo disponibles dans ledit terminal (100) ;
- une fonctionnalité de fusion prise en charge dans ledit terminal (100) ;
- des commandes d'interactivité prises en charge dans ledit terminal (100).

3. Procédé pour générer une vue composite selon la revendication 1,
dans lequel lesdites informations (212) indiquant des éléments de contenu disponibles comprennent un menu de programme de télévision.

4. Procédé pour générer une vue composite selon la revendication 1,
dans lequel lesdits modes d'interaction comprennent :
- la navigation ;
- la sélection d'une région d'intérét ;
- la sélection d'un angle de vue.

5. Procédé pour générer une vue composite selon la revendication 1,
dans lequel la fusion comprend une ou plusieurs des étapes suivantes :
- déformer un ou plusieurs desdits éléments de contenu ;
- interpoler un ou plusieurs desdits éléments de contenu ;
- assembler un ou plusieurs desdits éléments de contenu ;
- superposer certains desdits éléments de contenu.

6. Procédé pour générer une vue composite selon la revendication 1,
dans lequel l'adaptation desdits éléments de contenu diffusés en continu comprend l'adaptation aux conditions du réseau, aux conditions du terminal et à l'utilisation desdits éléments de contenu dans ledit terminal (100).

7. Procédé pour générer une vue composite selon la revendication 1, comprenant en outre l'étape suivante :
- préanalyser des parties environnantes d'un ou de plusieurs parmi lesdits éléments de contenu.

8. Serveur (200) pour générer une vue composite (300) à partir de multiples éléments de contenu par le biais d'une interaction avec un terminal (100), ledit serveur (200) comprenant :
- des moyens (201) pour recevoir et analyser une description de terminal (111 ; 211) contenant un profil de capacité dudit terminal (100) ;
- des moyens (201, 202) pour transmettre audit terminal (100) des informations (112 ; 212) indiquant des éléments de contenu disponibles et des modes d'interaction ;
- des moyens (201, 202) pour recevoir à partir dudit terminal (100) des informations indiquant des éléments de contenu sélectionnés et des modes d'interaction sélectionnés,
**CARACTÉRISÉ EN CE QUE** ledit serveur (200) comprend en outre :
- des moyens (202, 203, 204) pour diffuser en continu vers ledit terminal (100) des éléments de contenu sélectionnés (113, 114 ; 213, 214) optimisés conformément à ladite description du terminal et auxdits modes d'interaction sélectionnés ;
- des moyens (201) pour recevoir des informations en retour à partir dudit terminal (100) ; et
- des moyens (202, 203, 204) pour adapter lesdits éléments de contenu diffusés en continu (113, 114 ; 213, 214) en fonction desdites informations en retour.

9. Terminal (100) pour générer une vue composite (300) à partir de multiples éléments de contenu par le biais d'une interaction avec un serveur (200), ledit terminal (100) comprenant :
- des moyens (101) pour envoyer audit serveur (200) une description de terminal (111) contenant un profil de capacité dudit terminal (100) ;
- des moyens (101) pour recevoir à partir dudit serveur (200) des informations (112) indiquant des éléments de contenu disponibles et des modes d'interaction ; et
- des moyens (101) pour envoyer audit serveur (200) des informations indiquant des éléments de contenu sélectionnés et des modes d'interaction sélectionnés,
**CARACTÉRISÉ EN CE QUE** ledit terminal (100) comprend en outre :
- au moins un décodeur vidéo (102, 103) pour recevoir à partir dudit serveur (200), et décoder, des éléments de contenu sélectionnés (113, 114; 213, 214) optimisés conformément à ladite description de terminal et auxdits modes d'interaction sélectionnés ;
- un processeur de fusion (104) pour fusionner un ou plusieurs desdits éléments de contenu ;
- un processeur de rendu (106) pour rendre ladite vue composite (300) à partir d'éléments de contenu fusionnés ;
- des moyens (101) pour transférer des informations en retour vers ledit serveur (200) ;
et **en ce que** :
- ledit au moins un décodeur vidéo (102, 103) est adapté pour recevoir à partir dudit serveur (200), et décoder, des éléments de contenu diffusés en continu (113, 114 ; 213, 214) adaptés en fonction desdites informations en retour.
